# EUROPÄISCHE PATENTSCHRIFT

(11) **EP 3 031 628 B1**
(45) Veröffentlichungstag und Bekanntmachung des Hinweises auf die Patenterteilung: **31.05.2017**
(21) Anmeldenummer: 15186362.8
(22) Anmeldetag: 23.09.2015
(51) Int. Cl.: B60C 11/03, B60C 11/11, B60C 11/16

(54) **FAHRZEUGLUFTREIFEN**
PNEUMATIC TYRES FOR A VEHICLE
PNEUMATIQUES DE VÉHICULE

(30) Priorität: 05.12.2014 DE 102014225047
(43) Veröffentlichungstag der Anmeldung: 15.06.2016
(73) Patentinhaber: Continental Reifen Deutschland GmbH, 30165 Hannover (DE)
(72) Erfinder: Brandau, Christian, 30419 Hannover (DE); Schlittenhard, Jan, 30900 Wedemark (DE); Kötter, Maik, 30451 Hannover (DE)
(74) Vertreter: Finger, Karsten

(56) Entgegenhaltungen:
- EP-B1- 2 285 600
- EP-B1- 2 501 562
- WO-A1-2014/123181

## Beschreibung

Die Erfindung betrifft einen Fahrzeugluftreifen mit einem Laufstreifen mit durch Rillen, wie Umfangsrillen, Schrägrillen, Querrillen, voneinander getrennten Profilpositiven, wie Profilblöcken, die jeweils eine mit dem Untergrund in Kontakt kommende Oberfläche aufweisen, wobei Profilpositive vorgesehen sind, in welchen zumindest ein Spike mit seinem Spikekörper im Gummimaterial des Profilpositivs verankert ist, wobei der Spike einen Spikepin aufweist, der in radialer Richtung aus dem Spikekörper herausragt und die Oberfläche des Profilpositivs überragt, wobei dem Spike zumindest ein im Profilpositiv als Vertiefung ausgebildeter Ableitkanal zur Aufnahme der beim Kratzen des Spikes auf Eis entstehenden Eissplitter zugeordnet ist.

Es ist bekannt, dass sich die Performance von Spikereifen auf eisigem Untergrund durch in der Nähe der Spikes im Profilpositiv ausgebildete Ableitkanäle bzw. Vertiefungen verbessern lässt. Ein Fahrzeugluftreifen der eingangs genannten Art, welcher eine Vertiefung zur Aufnahme der durch die Spikes vom eisigen Untergrund abgekratzten Eissplitter aufweist, wobei die Vertiefung den Spike im Wesentlichen ringförmig umschließt, ist aus der EP 2 501 562 B1 bekannt. Die den Spike umlaufende Vertiefung erlaubt jedoch kein gezieltes Ableiten der durch das Kratzen des Spikes gebildeten Eissplitter, sondern fördert sogar das Entstehen von Fließbewegungen der Splitter in der Vertiefung, sodass ein Ableiten gestört und behindert wird. Die ringförmig umlaufende Vertiefung müsste ferner in einer Tiefe ausgeführt werden, die eine gute Aufnahme der Eissplitter sicherstellt, was jedoch, ohne die Einbettung des Spikes zu gefährden, nicht möglich ist. Aus der EP 2 285 599 B1 ist ein Fahrzeugluftreifen bekannt, bei dem Ableitkanäle vorgesehen sind, die als ausgeprägte Rinnen an der Oberfläche der Profilpositive ausgebildet sind und in eine das jeweilige Profilpositiv begrenzende Rille einmünden. Von dieser Rille aus können daher Schnee und auch Eissplitter durch die Rinne hindurch in Richtung Spike geleitet werden und daher den Abtransport der durch den Spike vom Untergrund abgekratzten Eissplitter behindern, wobei im schlimmsten Fall sogar die Rinne verstopft werden kann. Bei der aus der EP 2 285 600 B1 bekannten Ausführung sind beim Spike gerade oder gekrümmt verlaufende Vertiefungen in der Oberfläche des Profilpositivs ausgebildet, die von ihrer Ausrichtung und Ausführung her ebenfalls nicht dafür geeignet sind, für eine gute Ableitung der durch den Spike vom Untergrund abgekratzten Eissplitter zu sorgen. Insbesondere verlaufen die Vertiefungen großteils mit einer Breite und Tiefe, die die Verankerung der Spikes im Profilpositiv gefährden könnte.

Der Erfindung liegt die Aufgabe zu Grunde, bei einem Reifen der eingangs genannten Art Ableitkanäle für die durch den Spike vom Untergrund abgekratzten Eissplitter zur Verfügung zu stellen, die ein optimales Wegleiten der Eissplitter vom Spike gewährleisten und die Verankerung des Spikekörpers im Gummimaterial des Profilpositivs nicht gefährden.

Gelöst wird die gestellte Aufgabe erfindungsgemäß dadurch, dass an den in Umfangsrichtung gegenüber befindlichen Seiten des Spikekörpers unmittelbar bei diesem beginnend je ein Ableitkanal vorgesehen ist, welcher innerhalb des jeweiligen Profilpositivs endet, wobei jeder Ableitkanal einen über den Großteil seiner Längserstreckung verlaufenden Hauptabschnitt, in welchem die Breite und die Tiefe des Ableitkanals mit zunehmender Entfernung vom Spikekörper zunehmen, und an diesen anschließend einen Endabschnitt aufweist, in welchem die Tiefe und die Breite des Ableitkanals mit zunehmender Entfernung vom Spikekörper abnehmen.

Bei der Erfindung sind daher zwei Ableitkanäle vorgesehen, die, in Brems- und Traktionsrichtung (bei Vorwärtsfahrt) betrachtet, unmittelbar vor und hinter dem Spike angeordnet sind. Die vom Spike gebildeten Eissplitter können daher widerstandsfrei und ohne ihre Richtung ändern zu müssen sofort abgeführt werden. Um die Reibung der Eissplitter an den Begrenzungsflächen dieser Ableitkanäle möglichst gering zu halten, ist es wesentlich, dass sich diese vom Spike weg verbreitern und tiefer werden, sodass für die Splitter ein größer werdendes Volumen zur Verfügung steht. Dadurch wird erreicht, dass die Eissplitter sich nicht verklemmen und den gegenseitigen Fluss nicht stören. Der Endabschnitt, in welchem die Tiefe und die Breite des Ableitkanals wieder zunehmen, stabilisiert das Profilpositiv in diesem Bereich, was vor allem dann wichtig ist, wenn dort eine in Querrichtung verlaufende Profilpositivkante verläuft. Die Stabilisierung verhindert ein unerwünschtes "Umklappen" oder "Einrollen" dieser Kante beim Abrollen des Reifens. Die Erfindung stellt daher sicher, dass für die Eissplitterabführung ein ausreichend breites und tiefes Reservoir zur Verfügung steht, wobei das zur Spikeeinbettung erforderliche Gummimaterial, welches den Spike stützt und ein Verkippen verhindert, erhalten bleibt.

Bei einer bevorzugten Ausführungsform der Erfindung betragen die Erstreckungslängen der Ableitkanäle 4 mm bis 14 mm. Die tatsächliche Länge der Ableitkanäle wird an die Position der Spikes im Profilpositiv und die zur Verfügung stehende Fläche im Profilpositiv angeglichen. Dabei kann der eine Ableitkanal eine Länge aufweisen, die sich von der Länge des anderen Ableitkanals unterscheidet. Insbesondere ist es vorteilhaft, wenn der bei Vorwärtsfahrt vor dem Spike angeordnete Ableitkanal länger ausgeführt ist als der andere Ableitkanal. Je größer die Länge der Ableitkanäle ist, umso widerstandsärmer können die entstehenden Eissplitter abgeleitet werden.

Die Erstreckungslängen der Hauptabschnitte sind bei einer weiteren bevorzugten Ausführung der Erfindung wesentlich länger als die Erstreckungslängen der Endabschnitte und betragen insbesondere zwischen 3 mm und 12 mm.

Zur Reduzierung der Reibung am Boden der Ableitkanäle ist es ferner vorteilhaft, wenn die Hauptabschnitte unmittelbar beim Spikekörper, daher an der Spikekante, eine Breite aufweisen, die dem 0,5- bis 1,5-Fachen der axialen Breite des Spikepins entspricht.

Besonders bevorzugt ist ferner eine Ausführungsform, bei der die Hauptabschnitte an der Oberfläche des Profilpositivs von geradlinig verlaufenden Begrenzungskanten begrenzt sind, welche unter Vergrößerung ihres gegenseitigen Abstandes jeweils unter einem Winkel von 2° bis 10° zur Umfangsrichtung verlaufen. Dadurch wird für die Eissplitter ein in Richtung vom Spike weg größer werdendes Volumen mit optimiertem Verlauf zur Verfügung gestellt. In diesem Zusammenhang ist es auch besonders günstig, wenn erfindungsgemäß die Tiefe der Hauptabschnitte beim Spikekörper 0,5 mm bis 1,2 mm beträgt und in Richtung der Endabschnitte kontinuierlich auf eine Tiefe zunimmt, die das 1,05-Fache bis 3,6-Fache der erstgenannten Tiefe beträgt.

Die Endabschnitte werden gemäß der Erfindung derart ausgeführt, dass sie an der Oberfläche des Profilpositivs von Begrenzungskanten begrenzt sind, die spitz zusammenlaufen und miteinander einen Winkel von 95° bis 150°, insbesondere von 110° bis 130°, einschließen. Bevorzugter Weise beträgt ferner die Tiefe der Endabschnitte am Schnittpunkt ihrer Begrenzungskanten das 0,4- bis 2,4-Fache der Tiefe der Hauptabschnitte an der Spikekante und ist geringer als die größte Tiefe der Hauptabschnitte. Durch diese besondere Ausführung der Endabschnitte wird das Profilpositiv im Bereich der dem Endabschnitt benachbarten Profilpositivkante stabilisiert und die Funktion der Profilpositiv- bzw. Blockkanten als Griffkanten kann voll erhalten bleiben. Dabei ist es vorteilhaft, wenn der Mindestabstand der Ableitkanäle von benachbarten Profilpositivkanten 0,5 mm beträgt.

Besonders vorteilhaft ist eine erfindungsgemäße Ausgestaltung, bei der neben den Ableitkanälen innerhalb der Profilpositivs im Wesentlichen parallel zu den Ableitkanälen verlaufend Nebenkanäle vorgesehen sind. Diese können als "Overflow"-Kanäle fungieren, welche aus den Ableitkanälen seitlich austretende Eissplitter bei besonders langen Rutschvorgängen aufnehmen können. Zusätzlich weisen solche Nebenkanäle den Vorteil auf, dass sie unter starkem Schräglauf eine geradlinige Abführung der Eissplitter unterstützen.

Um diese Effekte besonders gut zu erreichen, ist es von Vorteil, wenn der Abstand zwischen den Ableitkanälen und den Nebenkanälen 1 mm bis 1,5 mm beträgt und wenn ferner die Nebenkanäle über den Großteil ihrer Erstreckung eine Breite von 1,5 mm bis 2,2 mm aufweisen, wobei diese Breite über die Erstreckung der Nebenkanäle in Richtung vom Spike weg kontinuierlich geringer werden kann. Die Nebenkanäle können ferner eine insbesondere konstante Tiefe von 0,5 mm bis 0,7 mm aufweisen.

Zur Stabilisierung der Profilpositivkanten ist es ferner vorteilhaft, wenn der Mindestabstand der Nebenkanäle von benachbarten Profilpositivkanten 0,4 mm beträgt.

Bevorzugter Weise besitzen die Nebenkanäle Erstreckungslängen, die an die Erstreckungslängen der Hauptkanäle angepasst sind, die Nebenkanäle können jedoch auch kürzer oder länger als die Ableitkanäle ausgeführt sein, wobei ihre Länge zwischen 3 mm und 14 mm beträgt.

Weitere Merkmale, Vorteile und Einzelheiten der Erfindung werden nun anhand der Zeichnung, die teilweise schematisch Ausführungsbeispiele darstellt, näher erläutert. Dabei zeigen
Fig. 1 eine Draufsicht auf einen Profilblock eines Laufstreifens eines Fahrzeugluftreifens mit eingesetztem Spike mit einer Ausführungsvariante der Erfindung,
Fig. 1a einen Schnitt entlang der Linie Ia-Ia der Fig. 1,
Fig. 1b einen Schnitt entlang der Linie Ib-Ib der Fig. 1 und
Fig. 2 bis Fig. 5 Draufsichten auf Profilblöcke mit eingesetztem Spike mit weiteren Ausführungsvarianten der Erfindung.

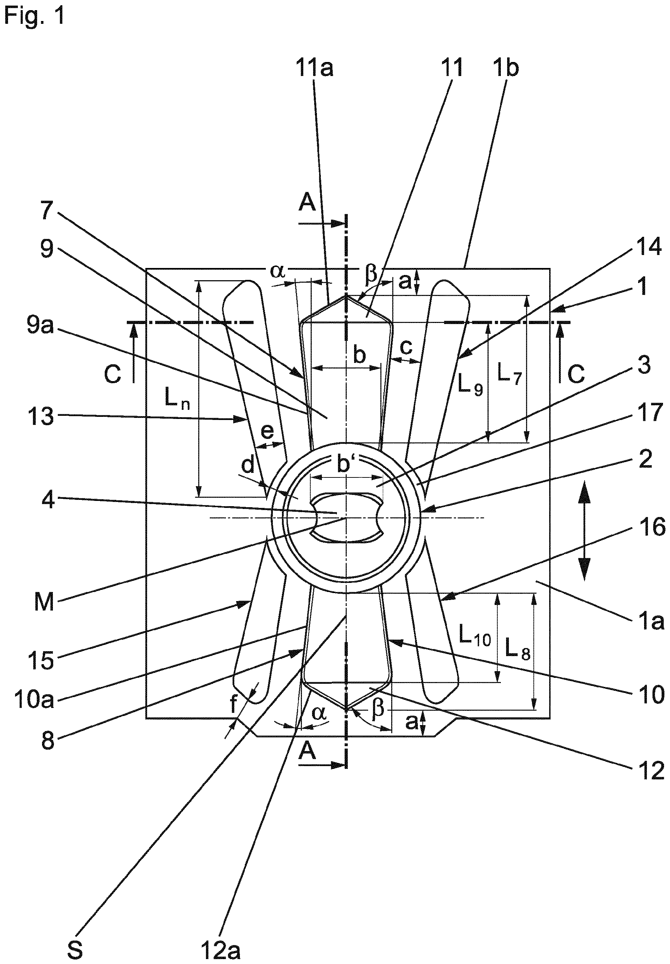

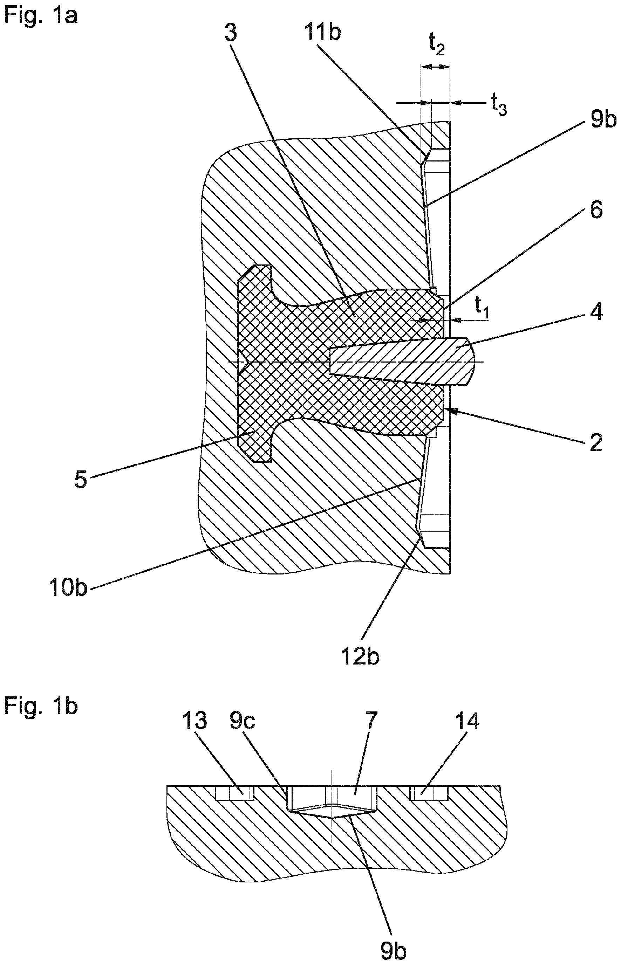

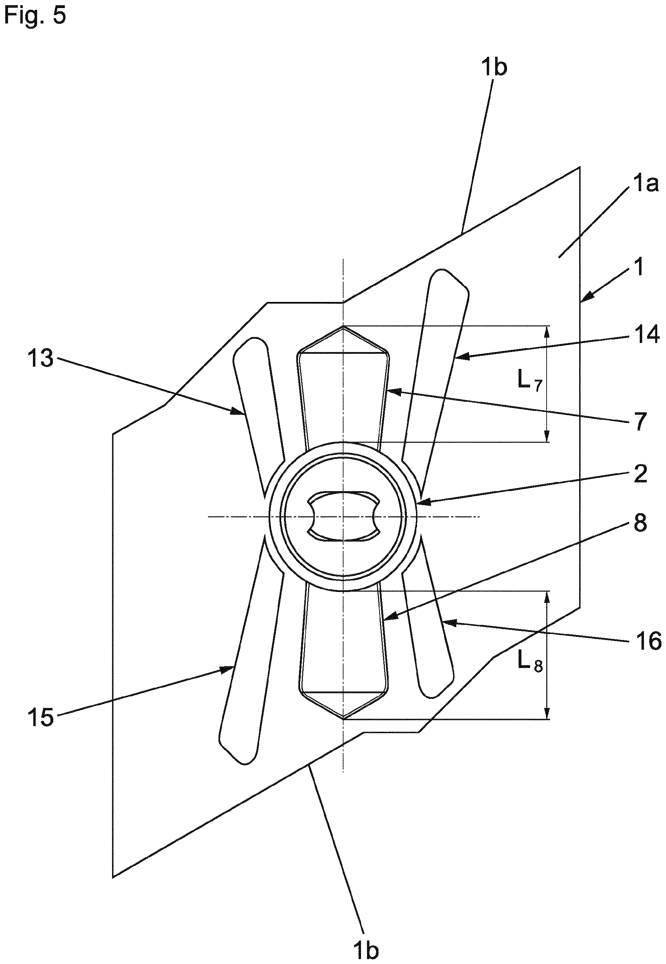

Die Figuren 1 bis 5 zeigen jeweils schematisch eine Draufsicht auf einen Profilblock 1 eines Laufstreifens eines Fahrzeugluftreifens, insbesondere eines Winterreifens in Radialbauart für Personenkraftwagen. Der Profilblock 1 kann beidseitig von einer sich in Umfangsrichtung des Laufstreifens, welche durch einen Doppelpfeil gekennzeichnet ist, verlaufenden Umfangsrille und durch je eine dem Profilblock 1 vor- und nachgeordneten, in axialer Richtung (Fig. 1 bis Fig. 4) oder unter einem spitzen Winkel zur axialen Richtung (Fig. 5) verlaufenden Querrille begrenzt sein. Die tatsächliche äußere Gestalt der Profilblöcke 1 kann von der vereinfacht dargestellten abweichen, sodass auch die vorgesehenen Rillen bezüglich der Umfangs- und Querrichtung beliebig orientiert sein können. Jeder Profilblock 1 kann ferner mit einer Anzahl nicht gezeigter, in an sich bekannter Weise ausgeführter Einschnitte versehen sein. Die Oberfläche 1a jedes Profilblockes 1 bildet die mit dem Untergrund beim Abrollen des Reifens in Kontakt kommende Fläche des Profilblockes 1.

Im Profilblock 1 ist in einem bei der Vulkanisation des Reifens erstellten Spikeloch ein insbesondere in an sich bekannter Weise ausgeführter Spike 2 mit einem Spikekörper 3 und einem Spikepin 4 eingesetzt und verankert. Der Spikekörper 3 weist bei der dargestellten Ausführungsform einen im Wesentlichen zylindrischen Basisteil mit einem Fußteil 5 und eine kreisrunde, ebene Oberfläche 6 auf. Das Spikeloch ist derart erstellt, dass die Oberfläche 6 entweder bündig mit der Oberfläche 1a des Profilblockes 1 abschließt oder sich geringfügig radial innerhalb der Oberfläche 1a befindet. Bei neuem Reifen beträgt der Abstand zwischen den Oberfläche 6 und der Oberfläche 1a nur wenige Zehntelmillimeter, insbesondere etwa 0,3 mm. Der im Spikekörper 3 verankerte Spikepin 4 erstreckt sich in radialer Richtung in den Spikekörper 3 hinein und überragt in bekannter Weise die Oberfläche 6 des Spikekörpers 3, sodass die Oberfläche 1a des Profilblockes 1 vom Spikepin 4 um 0,4 mm bis 2,0 mm, insbesondere um 1,0 mm, überragt wird. Bei den dargestellten Ausführungsvarianten ist der Spikepin 4 in Draufsicht länglich bzw. oval ausgeführt, wobei der Spike 2 vorzugsweise derart im Laufstreifen bzw. Profilblock 1 verankert wird, dass die größere Erstreckung des Spikepins 4 in axialer Richtung vorliegt.

Die Erfindung wird anhand der Figuren 1, 1a und 1b nachfolgend im Detail erläutert. Im mittleren Bereich des beispielhaft als Rechteck dargestellten Profilblockes 1 ist der Spike 2 verankert. Unmittelbar beim eingesetzten Spike 2 beginnend sind im Profilblock 1 zentrisch zum Mittelpunkt M der Oberfläche 6 des Spikekörpers 3 oberflächlich zwei Ableitkanäle 7, 8 ausgebildet, wobei sich der eine Ableitkanal 7 in die eine Umfangsrichtung und der andere Ableitkanal 8 in die andere Umfangsrichtung erstreckt.

Jeder Ableitkanal 7, 8 ist bezüglich einer von der Umfangsrichtung und der radialen Richtung aufgespannten Symmetrieebene S symmetrisch gestaltet und weist einen Hauptabschnitt 9, 10 und einen Endabschnitt 11, 12 auf. Der Hauptabschnitt 9, 10 weist seitliche Begrenzungskanten 9a, 10a an der Oberfläche 1a des Profilblockes 1 auf, die sich unter einem spitzen Winkel α zur Umfangsrichtung, welcher 2° bis 10°, insbesondere 5°, beträgt, geradlinig erstrecken, wobei der gegenseitige Abstand b der Begrenzungskanten 9a, 10a mit zunehmender Entfernung vom Spike 2 größer wird. Der gegenseitige Abstand b der Begrenzungskanten 9a, 10a entspricht der Breite der Hauptabschnitte 9, 10 und beträgt an der Spikekante das 0,5- bis 1,5-Fache der axialen Breite b' des Spikepins 4. Im Hauptabschnitt 9, 10 des jeweiligen Ableitkanals 7, 8, nimmt die Tiefe des Ableitkanals 7, 8, beim Spike 2 beginnend, in Richtung zu den Endabschnitten 11, 12 der Ableitkanäle 7, 8 kontinuierlich zu. Wie Fig. 1a und Fig. 1b zeigen, weist der Ableitkanal 7 im Hauptabschnitt 9 einen Boden 9b und seitliche Flanken 9c auf, die sich zwischen dem Boden 9b und den seitlichen Begrenzungskanten 9a in radialer Richtung erstrecken. Der Ableitkanal 8 ist auf analoge Weise ausgeführt, sein Boden 10b im Hauptabschnitt 10 ist in Fig. 1a gezeigt. Die Hauptabschnitte 9, 10 der Ableitkanäle 7, 8 weisen beim Spike 2 eine Tiefe t₁ von 0,5 mm bis 1,2 mm, insbesondere 0,8 mm bis 1,0 mm, auf. Am zweiten Ende der Hauptabschnitte 9, 10 beträgt ihre Tiefe t₂ das 1,05- bis 3,6-Fache der Tiefe t₁. Dabei kann die Ausführung ferner derart sein, dass die Hauptabschnitte 9, 10 im Querschnitt einen flach V-förmigen Boden 9b, 10b aufweisen, sodass die größte Tiefe t₂ im Zentrum des Bodens 9b, 10b vorliegt, an den seitlichen Flanken 9c kann die Tiefe t₂ geringfügig, um maximal 0,5 mm, insbesondere um maximal 0,3 mm, geringer sein. Bei lang ausgeführten Ableitkanälen 7, 8 beträgt t₂ insbesondere das 1,6-Fache der Tiefe t₁, bei kurz ausgeführten Ableitkanälen 7, 8 beträgt t₂ insbesondere das 1,5-Fache der Tiefe t₁.

Die jeweils in Umfangsrichtung entlang der Symmetrieebene S ermittelten maximalen Längen L₇, L₈ der Ableitkanäle 7, 8 sind an die jeweilige Position des Spikes 2 im Profilblock 1 und die Umfangsdimension des Profilblockes 1 angepasst und betragen 4 mm bis 14 mm. Der minimale Abstand a der Ableitkanäle 7, 8 von den in Querrichtung verlaufenden Profilblockkanten 1b beträgt 0,4 mm. Der Abstand a wird im rechten Winkel zur Erstreckung der betreffenden Profilblockkante 1b zwischen dieser und der dieser am nächsten liegenden Stelle des jeweiligen Ableitkanals 7, 8 ermittelt. Bei einer bevorzugten Ausführungsform der Erfindung beträgt der Abstand a bis zu 1 mm, kann jedoch, je nach Ausgestaltung des Profilblockes 1, in welchem der Spike 2 positioniert ist, auch wesentlich größer sein. Die Erstreckungslänge L₉, L₁₀ der Hauptabschnitte 9, 10 entlang der Symmetrieebene S beträgt je nach Ausführung und Anordnung der Spikes 2 in den Profilblöcken 1 und je nach der Ausführung der Profilblöcke 1 3 mm bis 12 mm.

Die Endabschnitte 11, 12 der Ableitkanäle 7, 8 sind an der Oberfläche 1a des Profilblockes 1 jeweils von zwei Begrenzungskanten 11a, 12a begrenzt, die spitz zusammenlaufen und zueinander unter einem Winkel β von 95° bis 150°, insbesondere 110° bis 130°, vorzugsweise etwa 120°, verlaufen. Die Endabschnitte 11, 12 weisen jeweils einen Boden 11b, 12b sowie in den Figuren nicht zu sehende Flanken auf, die vom jeweiligen Boden 11b, 12b bis zu den Kanten 11a, 12a in radialer Richtung verlaufen. Innerhalb der Endabschnitte 11, 12 verringert sich die Tiefe kontinuierlich von der oben erwähnten Tiefe t₂ auf eine Tiefe t₃, die am Ende der Endabschnitte 11, 12 das 0,4- bis 2,4-Fache der Tiefe t₁ beträgt, wobei vorzugsweise t₃ = t₁. Die Ableitkanäle 7, 8 können sich in ihren Erstreckungslängen unterscheiden, wobei es günstig ist, wenn der kürzere der beiden Ableitkanäle 7, 8 eine etwas grössere Tiefe aufweist als der längere.

Optional verlaufen neben den Ableitkanälen 7, 8 Nebenkanäle 13, 14 und 15, 16. Bei den dargestellten Ausführungsformen verläuft auf jeder Seite des Ableitkanals 7 ein Nebenkanal 13, 14, auf jeder Seite des Ableitkanals 8 ein Nebenkanal 15, 16, jeweils im Wesentlichen parallel zur benachbarten seitlichen Begrenzungskante 9a, 10a des Hauptabschnittes 9, 10, in einem Abstand c von 1 mm bis 1,5 mm. Dabei kann der Abstand c über die Erstreckung der Nebenkanäle 13, 14, 15, 16 vom Spike 2 weg geringfügig, insbesondere um 0,1 mm bis 0,4 mm, größer werden. Zwischen den Nebenkanälen 13, 14, 15, 16 und dem Spike 2 bzw. dessen Spikekörper 3 befindet sich bei den dargestellten Ausführungen eine schmale, in Draufsicht vorzugsweise als Kreisringabschnitt ausgebildete Gummibrücke 17, deren Breite d 0,1 mm bis 0,2 mm beträgt. Die Nebenkanäle 13, 14, 15, 16 können jedoch auch unmittelbar bis zum Spikekörper 3 reichen. Die zweiten Enden der Nebenkanäle 13, 14, 15, 16 befinden sich ebenfalls innerhalb des Profilblockes 1, wobei der Abstand f dieser Enden der Nebenkanäle 13, 14, 15, 16 von der benachbarten Profilblockkante 1b mindestens 0,4 mm beträgt. Die Nebenkanäle 13, 14, 16, 16 weisen einen U-förmigen Querschnitt auf, ihre Breite e wird, abgesehen von ihrer Breite unmittelbar an ihren Endabschnitten, in ihrem Verlauf vom Spike 2 weg geringfügig größer und beträgt 1,5 mm bis 2,2 mm. Die Tiefe der Nebenkanäle 13, 14, 15, 16 ist über ihre Erstreckung im Wesentlichen konstant und beträgt 0,5 mm bis 0,7 mm, insbesondere 0,6 mm. Die in Umfangsrichtung vorliegenden Erstreckungslängen Lₙ der Nebenkanäle 13, 14, 15, 16 variieren je nach der Anordnung des Spikes 2 im Profilblock 1 und der Ausgestaltung bzw. äußeren Form des Profilblockes 1 zwischen 3 mm und 14 mm.

Fig. 1 zeigt eine Ausführungsform, bei der die Erstreckungslänge L₇ des Ableitkanals 7 größer ist als die Erstreckungslänge L₈ des Ableitkanals 8. Die beiden neben dem Ableitkanal 7 verlaufenden Nebenkanäle 13, 14 weisen übereinstimmende Erstreckungslängen Lₙ auf und überragen den Ableitkanal 7 in Umfangsrichtung, hier beispielhaft um etwa 0,5 mm. Die beiden neben dem Ableitkanal 8 verlaufenden Nebenkanäle 15, 16 erstrecken sich in Umfangsrichtung im Wesentlichen genauso weit wie der Ableitkanal 8.

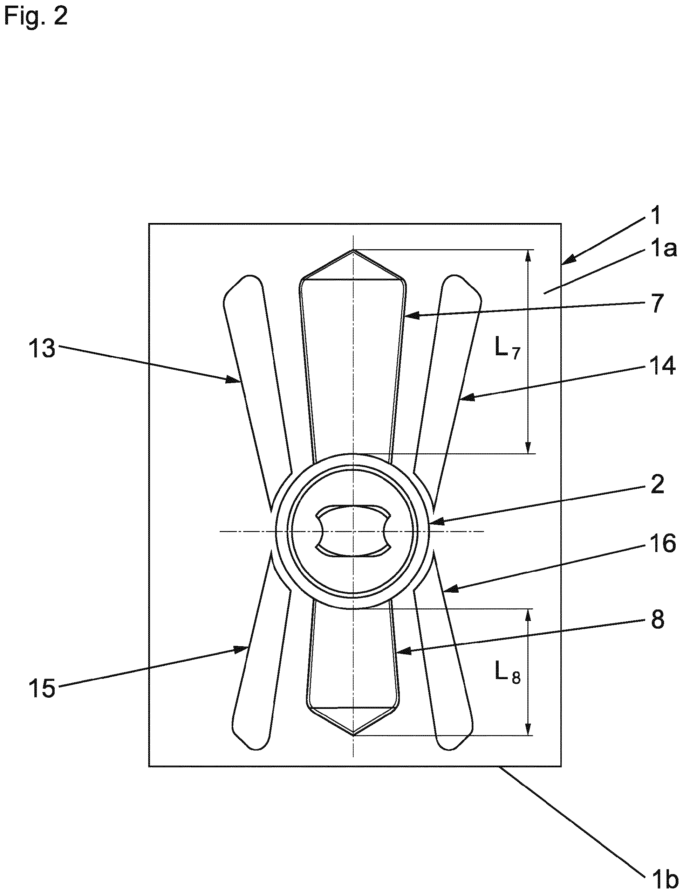

Die in den Figuren 2 bis 6 gezeigten Ausführungsformen sind Varianten der in Fig. 1 gezeigten Ausführung der Erfindung. Es sind daher in diesen Figuren hauptsächlich die Ableitkanäle 7, 8, die Nebenkanäle 13, 14, 15, 16, der jeweils dargestellte Profilblock 1 und der Spike 2 mit Bezugsziffern versehen.

Fig. 2 zeigt eine Ausführungsform, bei welcher der Spike 2 etwas außermittig im Profilblock 1 positioniert ist, sodass der Ableitkanal 7 eine größere Erstreckungslänge L₇ aufweisen kann als der diesem gegenüber befindliche Ableitkanal 8. Bei dieser Ausführung weisen ferner die beiden neben dem Ableitkanal 7 verlaufenden Nebenkanäle 13, 14 eine etwas geringere Erstreckungslänge auf als der Ableitkanal 7, die beiden neben dem Ableitkanal 8 verlaufenden Nebenkanäle 15, 16 sind geringfügig länger ausgeführt als der Ableitkanal 8.

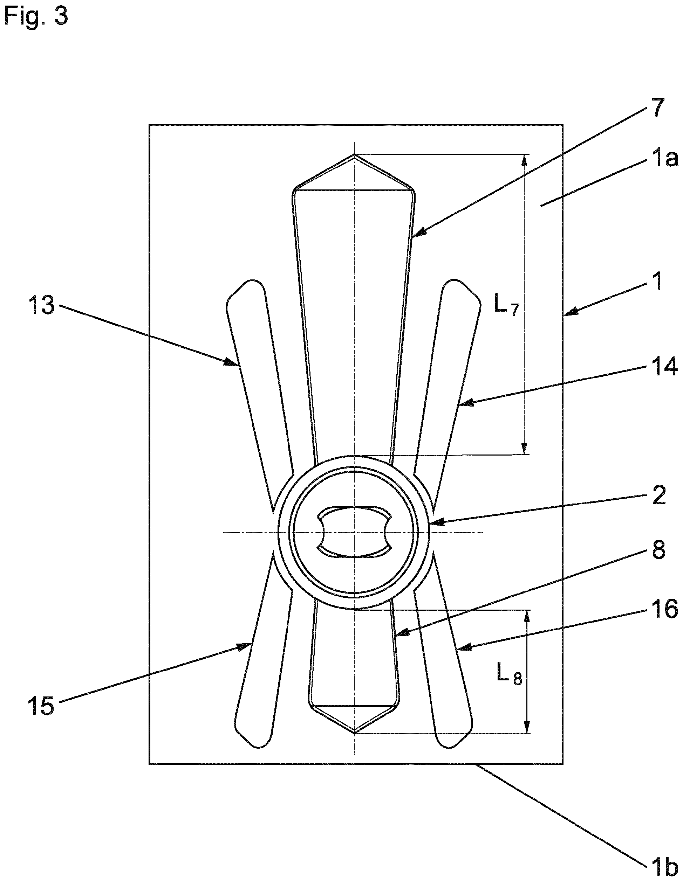

Fig. 3 zeigt eine Ausführungsvariante, bei welcher der Spike 2 relativ weit zu der in dieser Figur unteren Profilblockkante 1b versetzt ist und demnach deutlich außermittig im Profilblock 1 positioniert ist. Bei dieser Ausführungsvariante weist der Ableitkanal 7 eine mehr als doppelt so große Erstreckungslänge L₇ auf als der Ableitkanal 8. Die neben dem Ableitkanal 7 verlaufenden Nebenkanäle 13, 14 sind deutlich kürzer ausgeführt als der Ableitkanal 7, die neben dem Ableitkanal 8 angeordneten Nebenkanäle 15, 16 besitzen eine geringfügig größere Erstreckungslänge als der Ableitkanal 8.

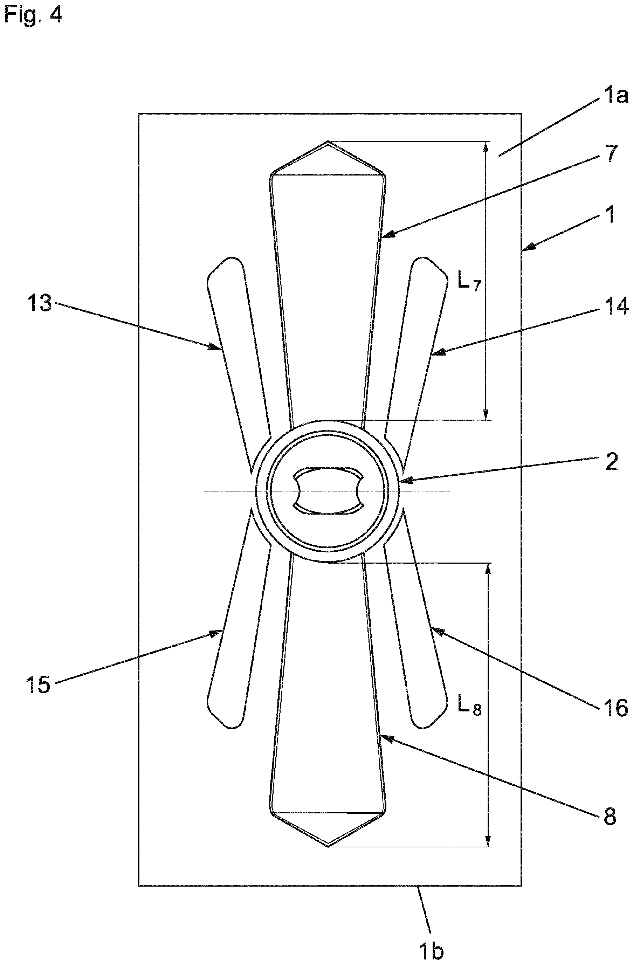

Fig. 4 zeigt eine Ausführungsform der Erfindung in einem Profilblock 1, dessen Umfangslänge größer ist als seine axiale Breite. Die Ableitkanäle 7, 8 weisen eine große Erstreckungslänge L₇, L₈ von beispielsweise 12 mm auf und sind hier gleich lang. Die Nebenkanäle 13, 14 und 15, 16 sind kürzer als die Ableitkanäle 7, 8 und in diesem Beispiel gleich lang.

Bei der in Fig. 5 gezeigten Ausführungsform gehen vom etwa mittig im Profilblock 1 positionierten Spike 2 die beiden Ableitkanäle 7, 8 aus, die im Wesentlichen gleich große Erstreckungslängen L₇, L₈ aufweisen. Infolge der parallelogrammförmigen Ausführung des Profilblockes 1 mit stumpfen und spitzen Winkeln in den Blockecken können die beiden neben dem Ableitkanal 7 angeordneten Nebenkanäle 13, 14 unterschiedliche Erstreckungslängen aufweisen, der in Fig. 5 links vom Ableitkanal 7 verlaufende Nebenkanal 13 ist kürzer ausgeführt als der in Fig. 5 rechts vom Ableitkanal 7 verlaufende Nebenkanal 14, welcher infolge der Ausgestaltung des Profilblockes 1 Platz für eine größere Erstreckungslänge zur Verfügung hat. Dies trifft auch auf den links neben dem Ableitkanal 8 verlaufenden Nebenkanal 15 zu, der neben diesem Ableitkanal 8 rechts verlaufende Nebenkanal 16 ist wiederum kürzer ausgeführt. Wenn der Profilblock 1, wie dargestellt, gezackte Kanten 1b aufweist, kann die Erstreckungslänge der Nebenkanäle 14, 16 entsprechend angepasst werden.

Selbstverständlich sind weitere Ausführungsvarianten, die nicht dargestellt sind, möglich, insbesondere beliebige Kombinationen von Ableitkanälen 7, 8 mit Nebenkanälen unterschiedlicher Längen. Die Spikes können ferner auch deutlich ausserhalb des mittleren Bereiches eines Profilpositivs positioniert sein.

### Bezugsziffernliste

- 1 .......................: Profilblock
- 1a .....................: Oberfläche
- 1b .....................: Profilblockkante
- 2 .......................: Spike
- 3 .......................: Spikekörper
- 4 .......................: Spikepin
- 5 .......................: Fußteil
- 6 .......................: Oberfläche
- 7, 8 ...................: Ableitkanal
- 9, 10.................: Hauptabschnitt
- 9a, 10a .............: Begrenzungskante
- 9b,10b ..............: Boden
- 9c .....................: Flanke
- 11, 12...............: Endabschnitt
- 11a, 12a ...........: Begrenzungskante
- 11b, 12b ...........: Boden
- 13, 14 ...............: Nebenkanal
- 15, 16 ...............: Nebenkanal
- 17 .....................: Gummibrücke
- a, b, c, f ............: Abstand
- b'......................: axiale Breite des Pins
- d, e ...................: Breite
- L₇, L₈ ...............: Erstreckungslänge
- L₉, L₁₀ ..............: Erstreckungslänge
- Lₙ .....................: Erstreckungslänge
- l₇, l₈ ..................: Längsachse
- M .....................: Mittelpunkt
- S .......................: Symmetrieebene
- t₁, t₂, t₃..............: Tiefe
- α, β ..................: Winkel

## Patentansprüche

1. Fahrzeugluftreifen mit einem Laufstreifen mit durch Rillen, wie Umfangsrillen, Schrägrillen, Querrillen, voneinander getrennten Profilpositiven (1), wie Profilblöcken, die jeweils eine mit dem Untergrund in Kontakt kommende Oberfläche (1a) aufweisen, wobei Profilpositive (1) vorgesehen sind, in welchen zumindest ein Spike (2) mit seinem Spikekörper (3) im Gummimaterial des Profilpositivs (1) verankert ist, wobei der Spike (2) einen Spikepin (4) aufweist, der in radialer Richtung aus dem Spikekörper (3) herausragt und die Oberfläche (1a) des Profilpositivs (1) überragt, wobei dem Spike (2) zumindest ein im Profilpositiv (1) als Vertiefung ausgebildeter Ableitkanal (7, 8) zur Aufnahme der beim Kratzen des Spikes auf Eis entstehenden Eissplitter zugeordnet ist,
**dadurch gekennzeichnet,**
**dass** an den in Umfangsrichtung gegenüber befindlichen Seiten des Spikekörpers (3) unmittelbar bei diesem beginnend je ein Ableitkanal (7, 8) vorgesehen ist, welcher innerhalb des jeweiligen Profilpositivs (1) endet, wobei jeder Ableitkanal (7, 8) einen über den Großteil seiner Längserstreckung verlaufenden Hauptabschnitt (9, 10), in welchem die Breite und die Tiefe (t₁, t₂) des Ableitkanals (7, 8) mit zunehmender Entfernung vom Spikekörper (3) zunehmen, und an diesen anschließend einen Endabschnitt (11, 12) aufweist, in welchem die Tiefe (t₃) und die Breite des Ableitkanals (7, 8) mit zunehmender Entfernung vom Spikekörper (3) abnehmen.

2. Fahrzeugluftreifen nach Anspruch 1, **dadurch gekennzeichnet, dass** die Erstreckungslängen (L₇, L₈) der Ableitkanäle (7, 8) 4 mm bis 14 mm betragen.

3. Fahrzeugluftreifen nach Anspruch 1 oder 2, **dadurch gekennzeichnet, dass** die Erstreckungslängen (L₉, L₁₀) der Hauptabschnitte (9, 10) 3 mm bis 12 mm betragen.

4. Fahrzeugluftreifen nach einem der Ansprüche 1 bis 3, **dadurch gekennzeichnet, dass** die Hauptabschnitte (9, 10) beim Spikekörper (3) an der Spikekante eine Breite (b) aufweisen, die das 0,5- bis 1,5-Fache der axialen Breite (b') des Spikepins (4) entspricht.

5. Fahrzeugluftreifen nach einem der Ansprüche 1 bis 4, **dadurch gekennzeichnet, dass** die Hauptabschnitte (9, 10) an der Oberfläche (1a) des Profilpositivs (1) von geradlinig verlaufenden Begrenzungskanten (9a, 10a) begrenzt sind, welche unter Vergrößerung ihres gegenseitigen Abstandes jeweils unter einem Winkel (α) von 2° bis 10° zur Umfangsrichtung verlaufen.

6. Fahrzeugluftreifen nach einem der Ansprüche 1 bis 5, **dadurch gekennzeichnet, dass** die Tiefe (t₁) der Hauptabschnitte (9, 10) beim Spikekörper (3) 0,5 mm bis 1,2 mm beträgt und in Richtung der Endabschnitte (11, 12) kontinuierlich auf eine Tiefe (t₂) zunimmt, die das 1,05- bis 3,6-Fache der erstgenannten Tiefe (t₁) entspricht.

7. Fahrzeugluftreifen nach einem der Ansprüche 1 bis 6, **dadurch gekennzeichnet, dass** die Endabschnitte (11, 12) an der Oberfläche (1a) des Profilpositivs (1) von Begrenzungskanten (11a, 12a) begrenzt sind, die spitz zusammenlaufen und miteinander einen Winkel (β) von 95° bis 150°, insbesondere von 110° bis 130°, einschließen.

8. Fahrzeugluftreifen nach einem der Ansprüche 1 bis 7, **dadurch gekennzeichnet, dass** die Tiefe der Endabschnitte (11, 12) am Schnittpunkt ihrer Begrenzungskanten (11a, 12a) geringer ist als die größte Tiefe der Hauptabschnitte (9, 10) und das 0,4- bis 2,4-Fache der Tiefe (t₁) der Hauptabschnitte (9, 10) an der Spikekante beträgt.

9. Fahrzeugluftreifen nach einem der Ansprüche 1 bis 8, **dadurch gekennzeichnet, dass** der Mindestabstand (a) der Ableitkanäle (7, 8) von benachbarten Profilpositivkanten (1b) 0,5 mm beträgt.

10. Fahrzeugluftreifen nach einem der Ansprüche 1 bis 9, **dadurch gekennzeichnet, dass** neben den Ableitkanälen (7, 8) innerhalb des Profilpositivs (1) im Wesentlichen parallel zu den Ableitkanälen (7, 8) Nebenkanäle (13, 14, 15, 16) verlaufen.

11. Fahrzeugluftreifen nach einem der Ansprüche 1 bis 10, **dadurch gekennzeichnet, dass** der Abstand (c) zwischen den Ableitkanälen (7, 8) und den Nebenkanälen (13, 14, 15, 16) 1 mm bis 1,5 mm beträgt.

12. Fahrzeugluftreifen nach einem der Ansprüche 1 bis 11, **dadurch gekennzeichnet, dass** die Nebenkanäle (13, 14, 15, 16) über den Großteil ihrer Erstreckung eine Breite (e) von 1,5 mm bis 2,2 mm aufweisen, wobei vorzugsweise diese Breite (e) über die Erstreckung der Nebenkanäle (13, 14, 15, 16) in Richtung vom Spike (2) weg kontinuierlich geringer wird.

13. Fahrzeugluftreifen nach einem der Ansprüche 1 bis 12, **dadurch gekennzeichnet, dass** die Nebenkanäle (13, 14, 15, 16) eine insbesondere konstante Tiefe von 0,5 mm bis 0,7 mm aufweisen.

14. Fahrzeugluftreifen nach einem der Ansprüche 1 bis 13, **dadurch gekennzeichnet, dass** der Mindestabstand (f) der Nebenkanäle (13, 14, 15, 16) von benachbarten Profilpositivkanten (1b) 0,4 mm beträgt.

15. Fahrzeugluftreifen nach einem der Ansprüche 1 bis 14, **dadurch gekennzeichnet, dass** die Nebenkanäle (13, 14, 15, 16) Erstreckungslängen (Lₙ) aufweisen, die 3 mm bis 14 mm betragen.

## Claims

1. Pneumatic vehicle tyre with a tread comprising profile positives (1) separated from one another by grooves, such as circumferential grooves, diagonal grooves, transverse grooves, such as tread bars, which have in each case a surface (1a) that comes into contact with the ground beneath, wherein profile positives (1) in which at least one spike (2) is anchored by its spike body (3) in the rubber material of the profile positive (1) are provided, the spike (2) having a spike pin (4), which protrudes out of the spike body (3) in a radial direction and projects beyond the surface (1a) of the profile positive (1), the spike (2) being assigned at least one expulsion channel (7, 8), which is formed as a depression in the profile positive (1) and is intended for receiving the fragments of ice that are produced when the spike scrapes on ice,
**characterized**
**in that** an expulsion channel (7, 8) is provided on each of the sides of the spike body (3) located opposite one another in the circumferential direction, beginning directly at the spike body and ending within the respective profile positive (1), each expulsion channel (7, 8) having a main portion (9, 10), which extends over most of its longitudinal extent and in which the width and the depth (t₁, t₂) of the expulsion channel (7, 8) increase with increasing distance from the spike body (3) and, adjoining this main portion, an end portion (11, 12), in which the depth (t₃) and the width of the expulsion channel (7, 8) decrease with increasing distance from the spike body (3).

2. Pneumatic vehicle tyre according to Claim 1, **characterized in that** the lengths of extent (L₇, L₈) of the expulsion channels (7, 8) are 4 mm to 14 mm.

3. Pneumatic vehicle tyre according to Claim 1 or 2, **characterized in that** the lengths of extent (L₉, L₁₀) of the main portions (9, 10) are 3 mm to 12 mm.

4. Pneumatic vehicle tyre according to one of Claims 1 to 3, **characterized in that** the main portions (9, 10) on the spike body (3) have at the edge of the spike a width (b) that corresponds to 0.5 to 1.5 times the axial width (b') of the spike pin (4).

5. Pneumatic vehicle tyre according to one of Claims 1 to 4, **characterized in that** the main portions (9, 10) are delimited at the surface (1a) of the profile positive (1) by delimiting edges (9a, 10a) that extend in a straight line and, as the distance from one another increases, run in each case at an angle (α) of 2° to 10° in relation to the circumferential direction.

6. Pneumatic vehicle tyre according to one of Claims 1 to 5, **characterized in that** the depth (t₁) of the main portions (9, 10) on the spike body (3) is 0.5 mm to 1.2 mm and increases continuously in the direction of the end portions (11, 12) to a depth (t₂) that corresponds to 1.05 to 3.6 times the first-mentioned depth (t₁).

7. Pneumatic vehicle tyre according to one of Claims 1 to 6, **characterized in that** the end portions (11, 12) are delimited at the surface (1a) of the profile positive (1) by delimiting edges (11a, 12a), which converge to a point and form with one another an angle (β) of 95° to 150°, in particular of 110° to 130°.

8. Pneumatic vehicle tyre according to one of Claims 1 to 7, **characterized in that** the depth of the end portions (11, 12) is smaller at the point of intersection of their delimiting edges (11a, 12a) than the greatest depth of the main portions (9, 10) and is 0.4 to 2.4 times the depth (t₁) of the main portions (9, 10) at the edge of the spike.

9. Pneumatic vehicle tyre according to one of Claims 1 to 8, **characterized in that** the minimum distance (a) of the expulsion channels (7, 8) from neighbouring edges of the profile positive (1b) is 0.5 mm.

10. Pneumatic vehicle tyre according to one of Claims 1 to 9, **characterized in that** secondary channels (13, 14, 15, 16) run alongside the expulsion channels (7, 8) within the profile positive (1), substantially parallel to the expulsion channels (7, 8).

11. Pneumatic vehicle tyre according to one of Claims 1 to 10, **characterized in that** the distance (c) between the expulsion channels (7, 8) and the secondary channels (13, 14, 15, 16) is 1 mm to 1.5 mm.

12. Pneumatic vehicle tyre according to one of Claims 1 to 11, **characterized in that** the secondary channels (13, 14, 15, 16) have over most of their extent a width (e) of 1.5 mm to 2.2 mm, this width (e) preferably becoming continuously smaller over the extent of the secondary channels (13, 14, 15, 16) in the direction of the spike (2).

13. Pneumatic vehicle tyre according to one of Claims 1 to 12, **characterized in that** the secondary channels (13, 14, 15, 16) have a depth, in particular a constant depth, of 0.5 mm to 0.7 mm.

14. Pneumatic vehicle tyre according to one of Claims 1 to 13, **characterized in that** the minimum distance (f) of the secondary channels (13, 14, 15, 16) from neighbouring edges of the profile positive (1b) is 0.4 mm.

15. Pneumatic vehicle tyre according to one of Claims 1 to 14, **characterized in that** the secondary channels (13, 14, 15, 16) have lengths of extent (Lₙ) that are 3 mm to 14 mm.

## Revendications

1. Pneumatique de véhicule avec une bande de roulement comportant des profils positifs (1), tels que des blocs profilés, séparés les uns des autres par des rainures, telles que des rainures longitudinales, des rainures obliques, des rainures transversales, qui présentent chacun une surface (1a) venant en contact avec le sol, dans lequel il est prévu des profils positifs (1) dans lesquels au moins un crampon (2) est ancré avec son corps de crampon (3) dans le matériau de gomme du profil positif (1), dans lequel le crampon (2) présente un pivot de crampon (4) qui est saillant hors du corps de crampon (3) en direction radiale et qui dépasse la surface (1a) du profil positif (1), dans lequel au moins un canal d'évacuation (7, 8) formé en creux dans le profil positif (1) est associé au crampon (2) pour recueillir les éclats de glace produits par le raclage du crampon sur la glace,
**caractérisé en ce qu'**il est prévu sur les côtés du corps de crampon (3) se trouvant en opposition dans la direction longitudinale chaque fois un canal d'évacuation (7, 8) commençant immédiatement près de celui-ci, qui se termine à l'intérieur du profil positif respectif (1), dans lequel chaque canal d'évacuation (7, 8) présente une partie principale (9, 10) s'étendant sur la grande partie de son extension longitudinale, dans laquelle la largeur et la profondeur (t₁, t₂) du canal d'évacuation (7, 8) augmentent avec l'augmentation de la distance du corps de crampon (3), et une partie d'extrémité (11, 12) se raccordant à celle-ci, dans laquelle la profondeur (t₃) et la largeur du canal d'évacuation (7, 8) diminuent avec l'augmentation de la distance du corps de crampon (3).

2. Pneumatique de véhicule selon la revendication 1, **caractérisé en ce que** les longueurs d'extension (L₇, L₈) des canaux d'évacuation (7, 8) valent 4 mm à 14 mm.

3. Pneumatique de véhicule selon la revendication 1 ou 2, **caractérisé en ce que** les longueurs d'extension (L₉, L₁₀) des parties principales (9, 10), valent 3 mm à 12 mm.

4. Pneumatique de véhicule selon l'une quelconque des revendications 1 à 3, **caractérisé en ce que** les parties principales (9, 10) près du corps de crampon (3) présentent sur le côté du crampon une largeur (b), qui correspond à 0,5 à 1,5 fois la largeur axiale (b') du pivot de crampon (4).

5. Pneumatique de véhicule selon l'une quelconque des revendications 1 à 4, **caractérisé en ce que** les parties principales (9, 10) sont limitées à la surface (1a) du profil positif (1) par des côtés de limitation s'étendant en ligne droite (9a, 10a), qui s'étendent respectivement sous un angle (α) de 2° à 10° avec la direction longitudinale avec l'augmentation de leur distance mutuelle.

6. Pneumatique de véhicule selon l'une quelconque des revendications 1 à 5, **caractérisé en ce que** la profondeur (t₁) des parties principales (9, 10) près du corps de crampon (3) vaut 0,5 mm à 1,2 mm et augmente de façon continue en direction des parties d'extrémité (11, 12) jusqu'à une profondeur (t₂), qui correspond à 1,05 à 3,6 fois la profondeur précitée (t₁).

7. Pneumatique de véhicule selon l'une quelconque des revendications 1 à 6, **caractérisé en ce que** les parties d'extrémité (11, 12) sont limitées à la surface (1a) du profil positif (1) par des côtés de limitation (11a, 12a), qui se rejoignent en pointe et forment l'un avec l'autre un angle (β) de 95° à 150°, en particulier de 110° à 130°.

8. Pneumatique de véhicule selon l'une quelconque des revendications 1 à 7, **caractérisé en ce que** la profondeur des parties d'extrémité (11, 12) au point d'intersection de leurs côtés de limitation (11a, 12a) est inférieure à la plus grande profondeur des parties principales (9, 10) et vaut 0,4 à 2,4 fois la profondeur (t₁) des parties principales (9, 10) sur le côté de crampon.

9. Pneumatique de véhicule selon l'une quelconque des revendications 1 à 8, **caractérisé en ce que** la distance minimale (a) des canaux d'évacuation (7, 8) aux côtés de profil positif voisins (1b) vaut 0,5 mm.

10. Pneumatique de véhicule selon l'une quelconque des revendications 1 à 9, **caractérisé en ce que** des canaux secondaires (13, 14, 15, 16) s'étendent essentiellement parallèlement aux canaux d'évacuation (7, 8) à côté des canaux d'évacuation (7, 8) à l'intérieur du profil positif (1).

11. Pneumatique de véhicule selon l'une quelconque des revendications 1 à 10, **caractérisé en ce que** la distance (c) entre les canaux d'évacuation (7, 8) et les canaux secondaires (13, 14, 15, 16) vaut 1 mm à 1,5 mm.

12. Pneumatique de véhicule selon l'une quelconque des revendications 1 à 11, **caractérisé en ce que** les canaux secondaires (13, 14, 15, 16) présentent sur la grande partie de leur extension une largeur (e) de 1,5 mm à 2,2 mm, dans lequel cette largeur (e) décroît de façon continue de préférence sur l'extension des canaux secondaires (13, 14, 15, 16) à mesure que l'on s'éloigne du crampon (2).

13. Pneumatique de véhicule selon l'une quelconque des revendications 1 à 12, **caractérisé en ce que** les canaux secondaires (13, 14, 15, 16) présentent en particulier une profondeur constante de 0,5 mm à 0,7 mm.

14. Pneumatique de véhicule selon l'une quelconque des revendications 1 à 13, **caractérisé en ce que** la distance minimale (f) des canaux secondaires (13, 14, 15, 16) aux côtés de profil positif voisins (1b) vaut 0,4 mm.

15. Pneumatique de véhicule selon l'une quelconque des revendications 1 à 14, **caractérisé en ce que** les canaux secondaires (13, 14, 15, 16) présentent des longueurs d'extension (Lₙ), qui valent 3 mm à 14 mm.
